# EUROPEAN PATENT APPLICATION

(11) **EP 1 463 287 A1**
(43) Date of publication of application: **29.09.2004**
(21) Application number: 04251726.8
(22) Date of filing: 25.03.2004
(51) Int. Cl.: H04N 1/00, H04N 5/225

(54) **Portable multifunctional device**

(30) Priority: 27.03.2003 KR 2003019250
(71) Applicant: Samsung Electronics Co., Ltd., Suwon-si Gyeonggi-do 442-742 (KR)
(72) Inventor: Jeon, Il-joong, Guseong-myeon Yongin-si Gyeonggi-do (KR)
(74) Representative: Walaski, Jan Filip

(57) **Abstract**

A method of setting a web camera mode for a portable multifunctional device is disclosed. In the portable multifunctional device having an interface connectable with a personal computer and a zoom lens, the web camera mode setting method includes determining whether the present mode is a web camera mode in which the personal computer is connected to the interface and the device is used as a web camera, setting the zoom lens to a wide-angle mode on the basis of a preset value if the present mode is the web camera mode, and providing an image signal corresponding to an image picked up by the zoom lens set to the wide-angle mode to the personal computer through the interface. According to the method, a user can directly use the portable multifunctional device such as a camcorder as a web camera without any additional manual configuration.

## Description

The present invention relates to a portable multifunctional device, and more particularly, to a method of setting a web camera mode for a portable multifunctional device. A multifunctional device is also referred to herein as a composite device.

A portable multifunctional device is a small device with multiple functions, including those of, for example, a camcorder, a digital camera, an MP3 player, a voice recorder and a data storage device. It can in addition compress and store video/audio signals using a hard disc drive (HDD) as an internal storage medium. Due to its small size, it can also be used as a web camera for a personal computer.

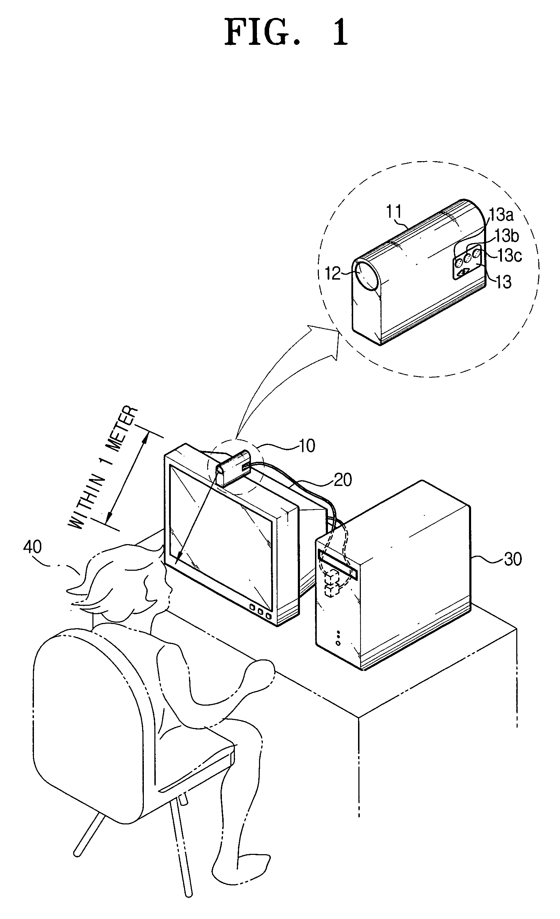

Figure 1 is a view illustrating the use of a conventional portable multifunctional device as a web camera.

As illustrated in Figure 1, the portable multifunctional device 10, which is typically placed on an upper part of a monitor 20, acquires an image of a user 40 located in front of the monitor 20, and provides a signal representing the acquired image to a personal computer (PC) 30. The portable multifunctional device 10 has a universal serial bus (USB) interface for interfacing to the PC 30, and a setting key unit, or control panel 13, for compensating and adjusting the image of the user 40 being displayed on the monitor 20 through the USB interface. The control panel 13 includes keys 13a, 13b and 13c that are used to adjust the focus, to set the image capture mode to a wide-angle mode, and to adjust the colour temperature of the image. In the situation in which the conventional portable multifunctional device 10 is used as a web camera, the environment is manually set through the control panel 13. Accordingly, in order to use the conventional portable multifunctional device 10 as a web camera, a zoom position setting and a focus adjustment are performed through the adjustment of a lens 12 of the portable multifunctional device 10, and then the colour temperature is adjusted. This procedure is complicated in comparison to the use of a dedicated web camera. A method of adjusting the focus and colour temperature has been proposed, which is performed by a program installed in the personal computer 30, for remotely controlling the portable multifunctional device 10. According to this method, however, the set-up is performed through a control menu displayed on the monitor 20, and it therefore takes a long time to properly set up the portable multifunctional device 10. By comparison, a dedicated web camera that can be attached to the upper part of the monitor and then directly used takes less time to set up. It is therefore inconvenient to use a conventional portable multifunctional device 10 as a web camera.

The present invention aims to provide a portable multifunctional device and a method of setting a web camera mode for the portable multifunctional device to reduce set-up time.

According to the present invention, there is provided a portable multifunctional device characterised by means for storing a preset configuration for use of the device as a web camera, means for configuring the device in accordance with the preset configuration when the device is arranged for use as a web camera.

According to the invention, there is further provided a method of configuring a multifunctional device for use as a web camera, characterised by storing a preset configuration, and configuring the device in accordance with the preset configuration when the device is connected for use as a web camera.

To achieve the above aspects and/or other features of the present invention, there is provided a method of setting a web camera mode for a portable multifunctional device having an interface connectable with a personal computer and a zoom lens, which comprises the steps of determining whether the present mode is a web camera mode in which the personal computer is connected to the interface and the device is used as a web camera, and if the present mode is determined to be in the web camera mode, setting the zoom lens to a wide-angle mode on the basis of a preset value.

Further provided is the step of providing an image signal corresponding to an image picked up by the zoom lens set to the wide-angle mode to the personal computer through the interface.

A further aspect of the present invention is that the step of setting the zoom lens to the wide-angle mode can include the step of setting the colour temperature of the image signal to a specified colour temperature.

Additionally, the step of setting the colour temperature can include the step of calculating a colour temperature difference between the preset colour temperature and a colour temperature of the image signal, and compensating for the preset colour temperature according to the calculated colour temperature difference. The step of setting the zoom lens to the wide-angle mode can include the step of driving the zoom lens in the wide-angle mode by adjusting a focal distance of the zoom lens. The step of setting the zoom lens to the wide-angle mode can further include the step of setting the focal distance of the zoom lens to a specified distance. The step of setting the focal distance to the specified distance can include the step of calculating a distance difference between the zoom lens and an object based on a preset value, and compensating for the focal distance of the zoom lens according to the calculated distance difference. The method can further comprise the step of releasing a setting of the wide-angle mode if the personal computer is disconnected from the interface. The determining step can include the step of determining whether the portable multifunctional device is used in a mass storage mode for setting the device to a mobile storage device, and if the device is used in the mass storage mode as a result of the determination, transmitting video/audio data stored in the portable multifunctional device to the personal computer through the interface.

In another aspect of the present invention, there is provided a portable multifunctional device which comprises an image pickup unit for performing a photoelectric conversion of an optical image taken through a zoom lens and outputting a corresponding electric signal, an NTSC/PAL decoder for converting a standard television signal into digital data to output the digital data, a storage medium for storing the digital data, an NTSC/PAL encoder for converting an input digital data into a standard-television signal to output the television signal, and a control unit for converting the electric signal output from the image pickup unit into digital data. The portable multifunctional device further comprises compressing and storing in the storage medium the converted digital data and the data outputted from the NTSC/PAL decoder, and generating a mode selection signal for selecting one of the data stored in the storage medium and the digital data corresponding to the electric signal output from the image pickup unit, and a switching unit for switching and outputting one of the digital data stored in the storage medium and the digital data corresponding to the electric signal to a serial port through a serial interface in response to the mode selection signal.

In still a further aspect of the present invention, the control unit sets a position of the zoom lens included in the image pickup unit to a wide-angle mode on the basis of a preset value in response to an external control signal. Further still, the control unit makes the digital data corresponding to the electric signal have a preset colour temperature value in response to the external control signal. In one particular exemplary embodiment of the present invention, the colour temperature value can be set at or about 4500K. Additionally, the switching unit outputs the digital data stored in the storage medium (which generally is a hard disk drive) to the serial port through the serial interface when the mode control signal is at a first logic level, and outputs the digital data corresponding to the electric signal to the serial port through the serial interface when the mode control signal is at a second logic level.

Embodiments of the invention will now be described by way of example with reference to the accompanying drawings, in which:
Figure 1 is a view illustrating the use of a conventional portable multifunctional device as a web camera;
Figure 2 is a perspective view of a portable multifunctional device according to an embodiment of the present invention;
Figure 3 is a view illustrating an inner structure of a lens unit illustrated in Figure 2;
Figure 4 is a block diagram of the portable multifunctional device according to an embodiment of the present invention;
Figure-5 is a flowchart illustrating a web camera mode setting method for a camcorder being used as the portable multifunctional device according to an embodiment of the present invention;
Figure 6 is a flowchart illustrating the process of step S300 in Figure 5; and
Figure 7 is a flowchart illustrating the process of step S500 in Figure 5.

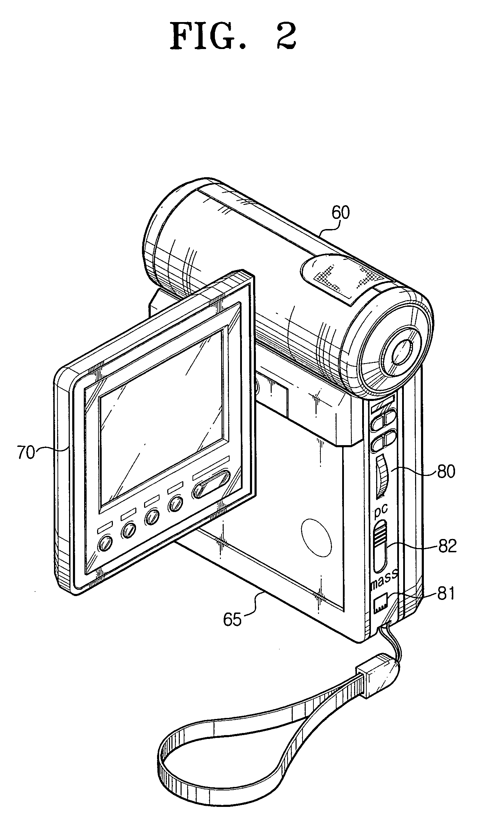

Figure 2 is a perspective view of a portable multifunctional device according to an embodiment of the present invention.

As shown in Figure 2, the portable multifunctional device includes a lens unit 60 installed on an upper surface of a main body 65 and having focal distance adjustment and zoom functions to perform image acquisition, and an LCD monitor 70, rotatably connected to the main body 65, for reproducing the acquired image and sound. The LCD monitor 70 is also used as a view finder for the object being viewed.

On a rear surface of the main body 65, a manipulation unit 80 is provided, which includes a switch for controlling the operation of the device. The manipulation unit 80 is provided with a USB interface terminal 81 for connecting the device to a personal computer (not illustrated), and a mode setting switch 82 for setting the portable multifunctional device to a web camera mode when the personal computer is connected to the USB interface terminal 81. The web camera mode is, for example, set by moving the switch 82 to the position marked 'PC' in Figure 2. The switch 82 can alternately be set to a mass storage mode, indicated by the position marked 'mass' in Figure 2.

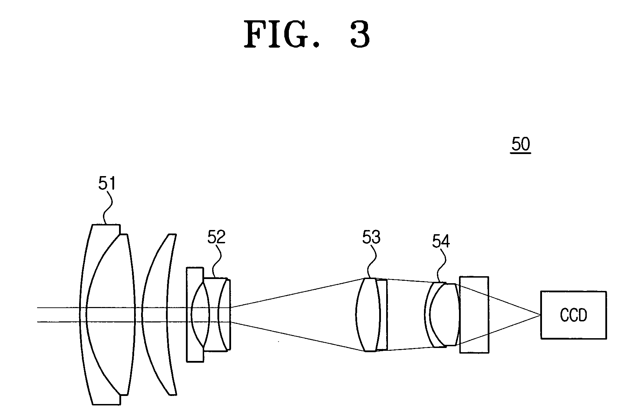

Figure 3 is a view illustrating an inner structure 50 of the lens unit structure 60 illustrated in Figure 2.

As shown in Figure 3, the lens unit inner structure 50 includes a first lens group 51, a second lens group 52, a third lens group 53, a fourth lens group 54, and a charge coupled device (CCD) for performing photoelectric conversion of an optical image incident through the fourth lens group 54. The-first or fourth lens group 51 or 54 is composed of a combination of one or at least two lenses having a positive refractive index, and is fixedly arranged. The second lens group 52 is composed of two lenses 52a and 52b having a negative refractive index, and driven by a motor to move toward the first lens group 51 and the third lens group 53. If the second lens group 52 moves toward the first lens group 51, the zooming ratio is decreased, while if it moves toward the third lens group 53, the zooming ratio is increased.

The fourth lens group 54 is composed of a combination of one or two lenses having a positive refractive index, and focuses the incident optical image according to the zooming ratio set by the first lens group 51, the second lens group 52 and the third lens group 53 as it is driven by a motor to perform a rectilinear motion.

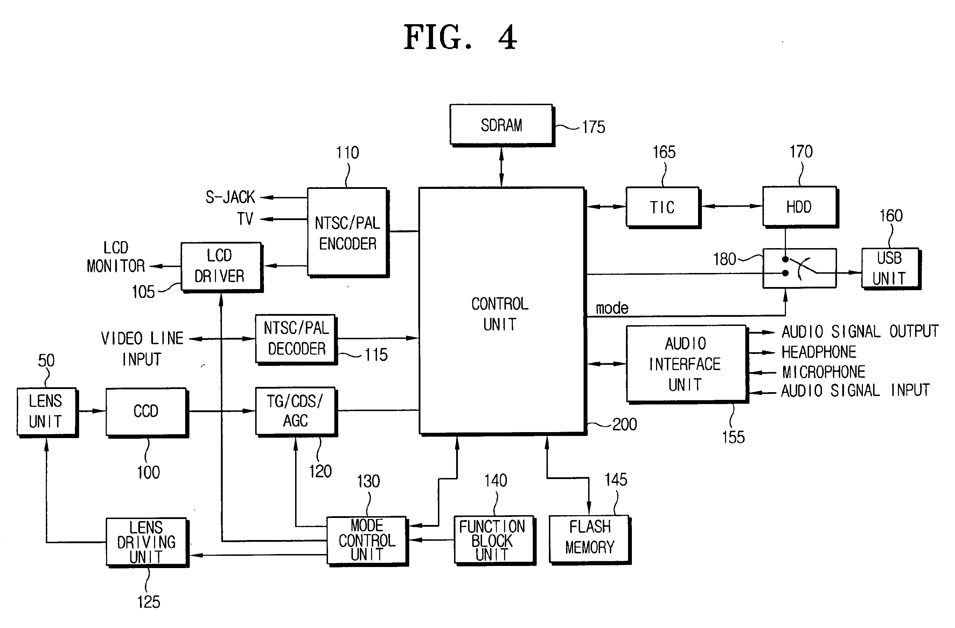

Figure 4 is a block diagram illustrating the internal construction of a portable multifunctional device according to the present invention.

The portable multifunctional device according to an embodiment of the present invention includes a lens unit 50, a CCD 100, an LCD driver 105, an NTSC/PAL encoder 110, an NTSC/PAL decoder 115, a timing generation/correlated double sampler/auto gain control (TG/CDS/AGC) 120, a lens driving unit 125, a mode control unit 130, a function block unit 140, a flash memory 145, an audio interface unit 155, a USB unit 160, a transition integrated circuit (TIC) 165, an HDD 170, a synchronous dynamic random access memory (SDRAM) 175 and a control unit 200.

The lens unit 50 has the structure as illustrated in Figure 3, and focuses the optical image obtained from the object or varies the zoom ratio.

The CCD 100 converts the optical image incident through the lens unit 50 into an electrical signal and outputs the signal.

The LCD driver 105 is used to drive the LCD monitor 13. The NTSC/PAL encoder 110 converts the signal output from the control unit 200 into an image signal of a National Television System Committee (NTSC) or Phase Alternate Line (PAL) system. The NTSC/PAL decoder converts the signal of the NTSC or PAL system input through a video line input terminal into digital data, and outputs the digital data to the control unit 200. Both the NTSC and PAL systems are standardized television output systems. The NTSC system is used in both Korea and the United States of America, and the PAL system is used in Europe and elsewhere (e.g., Israel).

The TG/CDS/AGC 120 removes noise from the signal output from the CCD 100 using a correlated double sampling circuit, and transfers the signal that has passed through an automatic gain control circuit to the control unit 200. The lens driving unit 125 drives the lens unit 50 so as to control the focus and an iris of the lens unit 50. When the portable multifunctional device according to an embodiment of the present invention is used as a web camera in association with the personal computer, the lens driving unit 125 receives preset values for setting a focal distance and a wide angle, for example, a positional value of the second lens group 52 and a positional value of the fourth lens group 54, and controls the lens group 50 according to the received positional values. The focal distance is typically set to 1 meter or less (for example, 60 cm) in consideration of the distance between the monitor provided in the personal computer and a user. A wide-angle mode for reducing the size of the image and widening the angle of view is set by moving the second lens group 52 of the lens unit 50 toward the first lens group 51 for a preset distance.

The mode control unit 130 controls the driving of the LCD driver 105 and the lens driving unit 125 according to the mode selected by the user. If a web camera mode is set by the mode setting switch 82, the mode control unit 130 receives the preset value stored in the flash memory 145 from the control unit 200, and provides the set value to the lens driving unit 125.

The function block unit 140 stores information regarding operation states selected by a user's manipulation of the manipulation unit 80, and transfers the information - to the mode control unit 130, so that the mode control unit performs the corresponding operation state.

The flash memory 145 stores system programs required for operating the device such as a boot-up program, application programs, and stores other important data that should be kept even if the power is cut off. The flash memory also stores preset values required when the portable multifunctional device operates as a web camera.

The audio interface unit 155 performs the function of interfacing for the input/output of an external audio signal and for the driving of audio devices such as a headphone, a microphone, and other devices. The USB unit 160 is a serial port, and provides a plug-and-play interface between the computer and peripheral devices such as an audio player and a printer, among others.

The TIC 165 is used for signal matching between the control unit 200 and the HDD 170, and the HDD 170 stores data compressed by the control unit 200. The HDD 170 can be a one-inch HDD that is useful in miniaturization of the device. The SDRAM 175 serves as a buffer that stores data required for operation of the device.

The control unit 200 converts the signal input from the TG/CDS/AGC 120 into digital data, compresses the converted data and data input from the NTSC/PAL decoder 115, the audio interface unit 155 and the USB unit 160, and stores the compressed data in the HDD 170 through the TIC 165. The control unit 200 also decompresses and outputs the data stored in the HDD 170 to the NTSC/PAL encoder 110 or the audio interface unit 155 during the reproduction of the video/audio signals stored in the HDD 170. In addition, the control unit 200 controls the entire operation of the device.

If the web camera mode is set by the mode setting switch 82, the control unit 200 receives preset values through the mode control unit 130, and applies a 'high'-level mode control signal to the switching unit 180. If the mass storage mode is set by the mode-setting switch 82, the control unit 200 applies a 'low'-level mode control signal to the switching unit 180.

The switching unit 180 outputs either the digital data from the control unit 200 or the digital data from the HDD 170 to the USB unit 160 in response to the mode control signal. In the case that the mode control signal applied to the switching unit 180 is 'high' (the web camera mode), the switching unit 180 outputs the signal from the lens unit 50 to the USB unit 160, while in the case that the mode control signal is 'low' (the mass storage mode), it outputs the digital data output from the HDD 170 to the USB unit 160. Accordingly, if the web camera mode is set by the mode setting switch 82, the switching unit 180 makes the digital image signal, which corresponds to the electric signal output from the TG/CDS/AGC 120, output to an outside device (for example, personal computer) through the USB unit 160. In addition, the device's image capture mode is set to the wide-angle mode by driving the lens unit 50 according to the preset value stored in the flash memory 145. Accordingly, the personal computer 30, which can be connected to the portable multifunctional device through the USB interface 81, receives the digital image signal and displays the image on the monitor 20.

If the mass storage mode is set by the mode setting switch 82, the switching unit 180 applies the digital data stored in the HDD 170 to the personal computer through the USB interface, and thus the HDD 170 can be used as a mobile storage device. If the mass storage mode is selected by the mode setting switch 82, the driver program stored in the flash memory 145 is loaded to the control unit 200, and thus the HDD 170 can be used as a mobile disc.

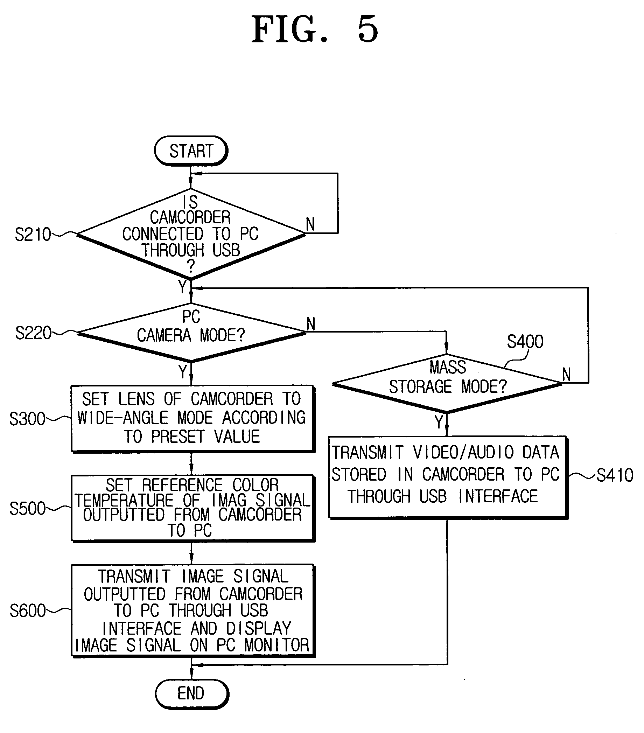

Figure 5 is a flowchart illustrating a web camera mode setting method for a camcorder being used as the portable multifunctional device according to a preferred embodiment of the present invention.

The method according to the preferred embodiment of the present invention begins by determining whether the camcorder and the personal computer 30 are connected together through the USB interface (step S210). The portable multifunctional device according to embodiments of the present invention has two types of transmission mode. One is a mass storage mode for loading the video/audio data stored in the HDD 170 built into the camcorder to the personal computer, and the other is a web camera mode in which the image from the camcorder is sent to the personal computer. Once it is determined that the camcorder and the personal computer are connected, the control unit 200 determines whether the camcorder is set to the web camera mode, namely that the mode setting switch 82 is set to the position 'PC' (step S220). If the camcorder is not in web camera mode, then the control unit 200 determines whether it is in the mass storage mode that is set by moving the mode setting switch 82 towards the mark "mass" (step S400). If the camcorder is set to the mass storage mode, a driver program is loaded from the flash memory 145 to the control unit 200. The driver program makes the personal computer recognise the HDD 170 provided in the camcorder as a mobile storage device. Video/audio data stored in the camcorder is then transmitted to the PC through the USB interface (step S410).

If, on the other hand, the camcorder is determined to be in the web camera mode (step S220), then the camcorder lens is set to the appropriate focal distance (for example, 60cm) and the appropriate mode, for example, wide angle mode, in accordance with the preset values stored in the flash memory 145 (step S300), for example by moving the lens groups 52, 54 to the positions specified by the preset values.

The control unit 200 then sets the colour temperature of the optical image incident through the lens unit 50 at or about 4500K (step S500). The colour temperature of 4500K corresponds to an illumination value under a fluorescent light, and this enables the user to directly use the camcorder as a web camera without the need for a separate lens or to set the colour temperature by means of a setting key. In the camcorder, the energy distributions of R, G and B signals are changed according to the colour temperature, and the control of the colour temperature, which is also called a white balance adjustment, is performed by adjusting an optical or electronic gain so-that the-energy distributions of R, G and B per wavelength become uniform. Since human eyes are well adapted for the surrounding light sources, the colour temperature value should be adjusted so that human eyes always sense natural colours. When the camcorder is used as a web camera, the colour temperature of about 4500K is set to conform to standard indoor illumination conditions. Finally, by setting the colour temperature, the image capture mode (for example, wide-angle mode) and the focal distance as described above, the user can directly use the camcorder mounted on the monitor as a web camera without any separate set-up requirements.

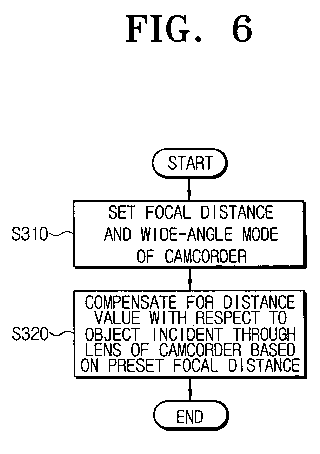

Figure 6 is a flowchart illustrating the process of step S300 in Figure 5 in more detail.

The process of step S300 begins with the control unit 200 loading the preset values of the focal distance and the image pickup mode of the camcorder from the flash memory 145, and applying the preset values to the mode control unit 130. The mode control unit 130 controls the second lens group 52 and the fourth lens group 54 by driving a stepping motor (not illustrated) provided in the lens unit 50 according to the applied preset values (step S310). If the distance between the monitor and the user exceeds 60 cm while the focal distance is set to 60 cm, the image displayed on the monitor is unclear (i.e., out-of-focus). If it is assumed that the distance between the monitor and the user does not exceed 1 meter, the amount of driving the stepping motor must perform, as it is controlled by the lens driving unit 125, becomes very small. The control unit 200 calculates the distance from the object (i.e., user) based on the preset focal distance (for example, 60 cm), and the calculated distance value is applied to the lens unit 50 via the mode control unit 130 and the lens driving unit 125 to drive the lens unit 50 (step S320). Since there is no significant difference between the focal distance to be adjusted corresponding to the amount of driving the stepping motor provides to the lens unit 50, and the preset focal distance of the camcorder, prompt adjustment of the focal distance can be achieved.

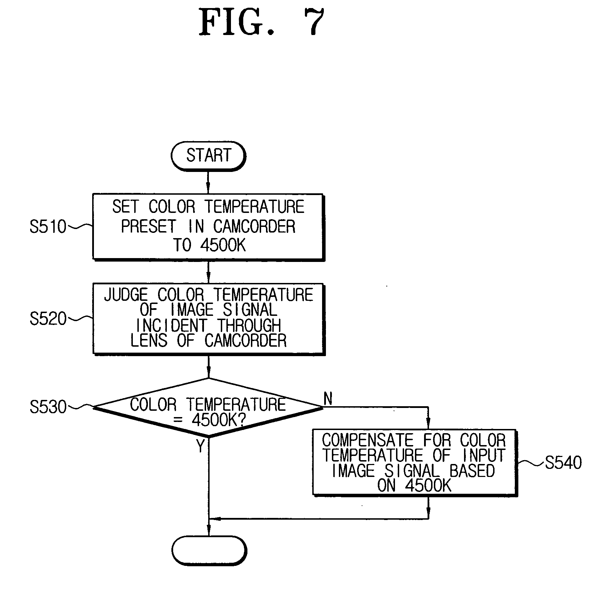

Figure 7 is a flowchart illustrating the process of step S500 in Figure 5 in more detail.

The process of step S500 begins when the colour temperature value of 4500K stored in the flash memory 145 is applied to the control unit when the camcorder is set to the web camera mode by the mode setting switch 82 provided in the camcorder. Then, the control unit 200 determines the colour temperature of the image applied to the lens unit 50 (step S520). The control unit 200 compares the colour temperature value of the image incident through the lens unit 50 with the preset value of 4500K to determine the difference between the colour temperature values (step S530).

If the colour temperature value of the image incident through the lens unit 50 is not equal to the preset value of 4500K ("no" path from decision step S530), the control unit 200 then compensates for the colour temperature value by the determined difference (step S540). Since the web camera is typically used under the illumination condition of a fluorescent light, no compensation is required for the colour temperature value unless an incandescent light is used. Even in the case where compensation is required, such compensation is performed quickly in comparison to the case where no colour temperature value is set in the camcorder. The default settings may be set according to the typical environment in which the web camera is likely to be used, which may, for example, be incandescent rather than fluorescent light.

As described above, when a portable multifunctional device such as a camcorder is used as a web camera in accordance with the embodiments of the present invention, the set-up time can be reduced without the need for the user to perform separate manipulation of the settings.

While the present invention has been described in detail, it should be understood that various changes, substitutions and alterations can be made hereto without departing from the scope of the invention as defined by the appended claims. For example, the interface between the computer and the device-is-not limited to a USB interface.

## Claims

1. A portable multifunctional device (10) **characterised by**:
means (145) for storing a preset configuration for use of the device as a web camera;
means for configuring the device in accordance with the preset configuration when the device is arranged for use as a web camera.

2. A portable multifunctional device according to claim 1, further comprising switching means (82) for switching the device (10) into a web camera mode.

3. A method of configuring a multifunctional device (10) for use as a web camera, **characterised by**:
storing a preset configuration; and
configuring the device in accordance with the preset configuration when the device is connected for use as a web camera.

4. A method according to claim 3, wherein the device is arranged for use as a web camera by switching the camera into a web camera mode.

5. A method according to claim 3 or 4, wherein the device is arranged for use as a web camera by connecting the device (10) to a computer (30).

6. A method according to any one of claims 3 to 5, wherein the step of configuring the device comprises setting its focal length to a predetermined distance.

7. A method according to any one of claims 3 to 6, wherein the step of configuring the device comprises setting the device to operate in a wide angle mode.

8. A method according to any one of claims 3 to 7, wherein the step of configuring the device comprises setting a predetermined colour temperature for the image.

9. A method of setting a web camera mode for a portable multifunctional device having an interface connectable with a personal computer and a zoom lens, the method comprising:
determining whether the present mode is a web camera mode in which the personal computer is connected to the interface and the device is used as a web camera; and
setting the zoom lens to a wide-angle mode on the basis of a preset value if the present mode is in the web camera mode.

10. The method as claimed in claim 9, further comprising:
providing an image signal corresponding to an image acquired by the zoom lens set to the wide-angle mode to the personal computer through the interface.

11. The method as claimed in claim 9, wherein the step of setting the zoom lens to the wide-angle mode comprises:
setting a colour temperature of the image signal to a specified colour temperature.

12. The method as claimed in claim 11, wherein the step of setting the colour temperature comprises:
calculating a colour temperature difference between the preset colour temperature and a colour temperature of the image signal; and
compensating for the preset colour temperature according to the calculated colour temperature difference.

13. The method as claimed in claim 9, wherein the step of setting the zoom lens to the wide-angle mode comprises:
driving the zoom lens in the wide-angle mode by adjusting a focal distance of the zoom lens.

14. The method as claimed in claim 13, wherein the-step of setting the zoom lens to the wide-angle mode further comprises:
setting the focal distance of the zoom lens to a specified distance.

15. The method as claimed in claim 14, wherein the step of setting the focal distance to the specified distance comprises:
calculating a distance difference between the zoom lens and an object based on a preset value, and compensating for the focal distance of the zoom lens according to the calculated distance difference.

16. The method as claimed in claim 9, further comprising:
releasing a setting of the wide-angle mode if the personal computer is disconnected from the interface.

17. The method as claimed in claim 9, wherein the determining step comprises:
determining whether the portable multifunctional device is used in a mass storage mode for setting the device to a mobile storage device; and
transmitting video/audio data stored in the portable multifunctional device to the personal computer through the interface if the device is used in the mass storage mode.

18. A portable multifunctional device comprising:
an image acquisition unit for performing a photoelectric conversion of an optical image taken through a zoom lens and outputting a corresponding electric signal;
an NTSC/PAL decoder for converting a standard television signal into digital data to output the digital data;
a storage medium for storing the digital data;
an NTSC/PAL encoder for converting an input digital data into a standard television signal to output the television signal;
a control unit for converting the electric signal output from the image pickup unit into digital data, compressing and storing in the storage medium the converted digital data and the data output from the NTSC/PAL decoder, and generating a mode selection signal for selecting either the data stored in the storage medium or the digital data corresponding to the electric signal outputted from the image pickup unit; and
a switching unit for switching and transmitting either the digital data stored in the storage medium or the digital data corresponding to the electric signal, to a serial port through a serial interface, in response to the mode selection signal.

19. The portable multifunctional device as claimed in claim 18, wherein the control unit sets a position of the zoom lens included in the image pickup unit to a wide-angle mode on the basis of a preset value in response to an external control signal.

20. The portable multifunctional device as claimed in claim 18, wherein the control unit makes the digital data corresponding to the electric signal have a preset colour temperature value in response to the external control signal.

21. The portable multifunctional device as claimed in claim 20, wherein the colour temperature value is at or about 4500K.

22. The portable multifunctional device as claimed in claim 18, wherein the switching unit outputs the digital data stored in the storage medium to the serial port through the serial interface when the mode control signal is in a first logic level, and outputs the digital data corresponding to the electric signal to the serial port through the serial interface when the mode control signal is in a second logic level.

23. The portable multifunctional device as claimed in claim 18, wherein the storage medium is a hard disc drive.
